# EUROPEAN PATENT SPECIFICATION

(11) **EP 4 629 019 B1**
(45) Date of publication and mention of the grant of the patent: **29.04.2026**
(21) Application number: 25155886.2
(22) Date of filing: 04.02.2025
(51) Int. Cl.: G05D 1/81, G05D 109/30, G05D 107/00, G05D 1/646

(54) **SHIP CONTROL DEVICE, SHIP CONTROL METHOD, AND SHIP CONTROL PROGRAM**
SCHIFFSSTEUERUNGSVORRICHTUNG, SCHIFFSSTEUERUNGSVERFAHREN UND SCHIFFSSTEUERUNGSPROGRAMM
DISPOSITIF DE COMMANDE DE NAVIRE, PROCÉDÉ DE COMMANDE DE NAVIRE ET PROGRAMME DE COMMANDE DE NAVIRE

(30) Priority: 05.04.2024 JP 2024061164
(43) Date of publication of application: 08.10.2025
(73) Proprietor: FURUNO ELECTRIC CO., LTD., Nishinomiya-City, Hyogo 662-8580 (JP)
(72) Inventor: UENO, Hideki, Nishinomiya-City, 662-8580 (JP)
(74) Representative: Müller Hoffmann & Partner

(56) References cited:
- EP-A1- 3 187 952
- US-B1- 11 753 132
- US-B2- 7 305 928

## Description

The present invention relates to automatic navigation control of a ship at low speed.

Patent Document 1 describes an automatic navigation device which enables navigation using a joystick.

Japanese Patent No. 3493345

EP 3 187 952 A1 discloses a hydraulic steering system including a logic device configured to communicate with an autopilot pump controller, a control surface reference sensor, an orientation sensor, and/or a gyroscope. Control and sensor signals provided by the pump controller and/or the various sensors are used to selectively enable and/or disable an autopilot release signal. The autopilot release signal enables or disables the autopilot pump controller or an autopilot pump.

US 7 305 928 B2 discloses a vessel positioning system configured to maneuver a marine vessel in such a way that the vessel maintains its global position and heading in accordance with a desired position and heading selected by the operator of the marine vessel. When used in conjunction with a joystick, the operator of the marine vessel can place the system in a station keeping enabled mode and the system then maintains the desired position obtained upon the initial change in the joystick from an active mode to an inactive mode. In this way, the operator can selectively maneuver the marine vessel manually and, when the joystick is released, the vessel will maintain the position in which it was at the instant the operator stopped maneuvering it with the joystick.

US 11 753 132 B1 discloses a controller that controls a shift operation of a propulsion device between forward, neutral, and reverse, and steering of the propulsion device in accordance with a tilt operation of a joystick. The controller stores a control state of the propulsion device according to the tilt operation of the joystick when a switch is operated. The controller maintains the propulsion device in the control state even when the joystick is returned to the neutral position.

However, the apparatus of Patent Document 1 is provided with a fixed point holding operation unit and a joystick. Therefore, switching operation between manual navigation using the joystick and automatic navigation using the fixed point holding operation unit is complicated for the operator. In addition, when the apparatus is not provided with such a configuration for separately operating manual navigation and automatic navigation, it is not easy to return to automatic navigation from various adjustments to automatic navigation.

Therefore, it is an object of the present invention to realize switching to automatic navigation by simple operation.

Therefore, it is an object of the present invention to realize switching to automatic navigation by simple operation.

The problem is solved by the teachings of the independent claims. Further embodiments are defined in the dependent claims. The invention is defined by the appended claims.

A ship control device according to an embodiment of the present disclosure includes an input unit, an operation monitoring unit, and a ship holding unit. The input unit inputs an operating position of an operating device that controls a moving direction or propulsion force of a ship. The operation monitoring unit detects an operation stationary state in which the operating position of the operating device does not change over a predetermined period of time based on a time variation in the operating position of the operating device. The ship holding unit performs ship holding control to hold a behavior of the ship when the ship holding condition, including the detection of the operation stationary state, is satisfied.

In this configuration, it is possible to switch to ship holding (automatic navigation) by not changing the operating device for a predetermined period of time. Therefore, switching to the automatic navigation may be realized with a simple operation.

In the ship control device according to an embodiment of the present disclosure, the operating device includes a joystick. The joystick may perform forward, neutral, and backward operations according to the operating position. The operation monitoring unit detects the operation stationary state in which the operating position corresponding to the forward operation or the backward operation by the joystick does not change for the predetermined time. The ship holding unit holds the propulsion force at the time when the detection by the operation monitoring unit occurs.

In this configuration, the behavior (direction of travel, propulsion) of the ship according to an operating state before switching to the automatic navigation is reflected during the automatic navigation.

In the ship control device according to an embodiment of the present disclosure, the operating device includes a joystick. The operation monitoring unit detects the operation stationary state when the operating position of the joystick remains neutral. The ship holding unit holds the moving direction of the ship at the time of detection by the operation monitoring unit.

In this configuration, switching to the automatic navigation may be performed by reflecting the intention of the user more surely while using simple operation of the joystick.

In the ship control device according to an embodiment of the present disclosure, the operating device includes a first switch that switches from manual navigation to automatic navigation. The ship control device includes an automatic navigation unit having a preliminary adjustment unit and a ship holding unit. When the operation of switching to automatic navigation is detected by the first switch, the preliminary adjustment unit sets a target value of the propulsion force of the ship to an initial propulsion force for holding the ship. The ship holding unit performs ship holding control to hold the initial propulsion force after the propulsion force of the ship becomes the initial propulsion force.

In this configuration, switching from manual navigation to automatic navigation may be performed by simple operation of the first switch through the state of the initial propulsion force.

In the ship control device according to an embodiment of the present disclosure, when a switch to automatic navigation by the first switch is detected, the preliminary adjustment unit approaches the initial propulsion force from the current propulsion force, for holding the ship, while adjusting an acceleration.

In this configuration, it is possible to suppress a sudden change in the ship speed at the transition from manual navigation to automatic navigation.

In the ship control device according to an embodiment of the present disclosure, the operation monitoring unit detects the operation stationary state by keeping the operating position of the joystick neutral after the ship holding control for holding the initial propulsion force starts. The ship holding unit holds the moving direction of the ship at the time when the operation stationary state is detected.

In this configuration, it is possible to suppress a sudden change in the moving direction of the ship at the transition from manual navigation to automatic navigation.

In the ship control device according to an embodiment of the present disclosure, the ship holding unit adjusts the propulsion force at the time of holding the ship based on an operation in the longitudinal direction during the ship holding control.

In this configuration, the propulsion force during automatic navigation may be easily adjusted by the joystick.

In the ship control device according to an embodiment of the present disclosure, the operating device is provided with a second switch that receives the operation of controlling an intermittent propulsion force. The intermittent control unit starts intermittent control based on the operation of the second switch during ship holding control.

In this configuration, automatic navigation at a lower speed may be realized.

In the ship control device according to an embodiment of the present disclosure, the intermittent control unit is provided with a third switch that accepts the operation of switching the control pattern of the intermittent control in the operating device. The intermittent control unit switches the control pattern of intermittent control based on the operation of the third switch.

In this configuration, the propulsion force during intermittent control may be adjusted.

In the ship control apparatus according to an embodiment of the present disclosure, the second switch also serves as the third switch.

In this configuration, the number of components for intermittent control may be reduced.

In the ship control apparatus according to an embodiment of the present disclosure, the ship holding unit cancels the ship holding control when the operation of the first switch is detected during the ship holding control.

In this configuration, the ship holding control (automatic navigation control) may be released by a simple operation of the first switch.

In the ship control device according to an embodiment of the present disclosure, the control unit cancels the automatic navigation control when it detects that the joystick is operated to the automatic navigation control cancel state.

In this configuration, the automatic navigation may be released by a simple operation of the joystick.

The ship control device according to an embodiment of the present disclosure includes an input unit, a preliminary adjustment unit, and a ship holding unit. The input unit receives the input of the operation of the joystick for controlling the behavior of the ship and the operation of the first switch for switching from manual navigation to automatic navigation. When the first switch detects the operation of switching to automatic navigation, the preliminary adjustment unit sets the target value of the propulsion force of the ship to the initial propulsion force for holding the ship. When the ship holding condition, including that the propulsion force of the ship becomes the initial propulsion force, is satisfied, the ship holding unit performs the ship holding control with the initial propulsion force.

In this configuration, it is possible to shift from manual navigation (manual navigation) to automatic navigation (automatic navigation: ship holding control) through the state of initial propulsion by operation of the joystick. Therefore, safe switching from manual navigation to automatic navigation may be realized with simple operation.

The ship control device according to an embodiment of the present disclosure is provided with an operation monitoring unit which detects an operation stationary state in which the operation position of the joystick is neutral and does not change for a predetermined time during ship holding control. The ship holding unit holds the moving direction of the ship at the time when detection by the operation monitoring unit occurs.

In this configuration, the ship moves from manual navigation to automatic navigation reflecting the intention of the user more surely, and the moving direction of the ship desired by the user may be held.

In the ship control device according to an embodiment of the present disclosure, the behavior of the ship includes the moving direction including the rudder angle or course of the ship, or at least one of throttle opening, engine speed, and speed of the ship, and the propulsion force.

In this configuration, specific examples of moving direction and propulsion force are shown, and at least one of them may be controlled.

The illustrated embodiments of the subject matter may be best understood by reference to the drawings, wherein like parts are designated by like numerals throughout. The following description is intended only by way of example, and simply illustrates certain selected embodiments of devices, systems, and processes that are consistent with the subject matter as claimed herein:
**FIG. 1** is a functional block diagram showing an example of the configuration of a ship control system including a ship control device according to an embodiment of the present invention;
**FIG. 2** is an external perspective view of a joystick;
**FIGS. 3A**, **3B,** and **3C** are diagrams for explaining the behavior of the joystick;
**FIG. 4 (A)** is a diagram showing an example of the relationship between the position of the head viewed in plan view and the value of the operation input value (x) and the value of the operation input value (y), and **FIG. 4 (B)** is a diagram showing an example of the relationship between the rotation amount of the head and the value of the operation input value (z);
**FIG. 5** is a diagram showing an example of a plurality of operation buttons;
**FIG. 6** is a diagram showing the relationship of each control in the low-speed navigation control mode.;
**FIG. 7 (A)** is a diagram showing an example of the time variation of the throttle opening in the normal throttle control, and **FIGS. 7 (B), 7 (C),** and **7 (D)** are diagrams showing an example of the time variation of the throttle opening in the multi-step intermittent throttle control;
**FIG. 8** is a diagram showing an example of the behavior of a ship in the low-speed navigation control mode;
**FIG. 9** is a flowchart showing a schematic process of a ship control method according to an embodiment of the present invention;
**FIG. 10** is a flowchart showing a transition from the manual operation mode to the automatic navigation control mode in the low-speed navigation control mode;
**FIG. 11** is a flowchart showing an adjustment of the initial throttle opening in the automatic navigation control mode;
**FIG. 12** is a flowchart showing an adjustment of the initial throttle opening in the automatic navigation control mode;
**FIGS. 13 (A)** and **13 (B)** are flowcharts showing an adjustment of the throttle opening in the automatic navigation control mode;
**FIG. 14** is a flowchart for adjusting the command rudder angle in the automatic navigation control mode;
**FIG. 15** is a flowchart for controlling the intermittent throttle in the automatic navigation control mode;

Example apparatus are described herein. Other example embodiments or features may further be utilized, and other changes may be made, without departing from the scope of the subject matter of the appended claims. In the following detailed description, reference is made to the accompanying drawings, which form a part thereof.

The example embodiments described herein are not meant to be limiting. It will be readily understood that the aspects of the present disclosure, as generally described herein, and illustrated in the drawings, may be arranged, substituted, combined, separated, and designed in a wide variety of different configurations, all of which are explicitly contemplated herein.

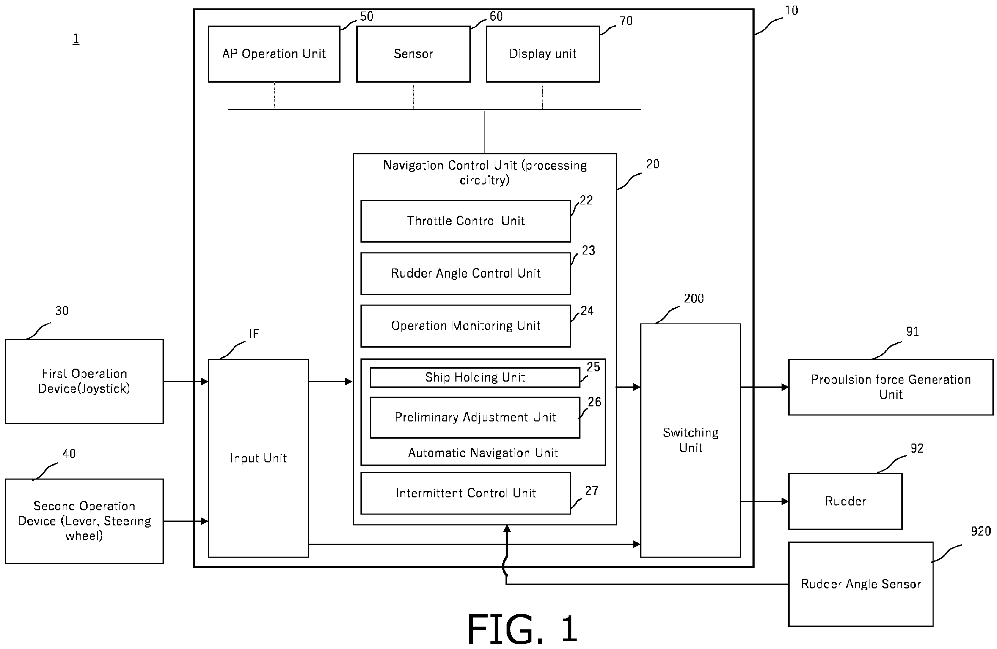

A ship control technology (Ship control device, ship control method, and ship control program) according to an embodiment of the present invention may be described with reference to the figures. **FIG. 1** is a functional block diagram showing an example of the configuration of a ship control system including a ship control device according to an embodiment of the present invention.

(Configuration of the ship control system **1** and the ship control device **10**) As shown in **FIG. 1****,** the ship control system **1** includes a ship control device **10,** a first operating device **30,** a second operation device **40,** a propulsion force generation unit **91,** a rudder **92,** and a rudder angle sensor **920.** The first operation device corresponds to the "operation device" of the present invention.

The ship control device **10** includes a navigation control unit **20,** an AP operation unit **50,** a sensor **60,** a display unit **70,** a switching unit **200,** and an input unit **IF.**

The ship control system **1** is installed, for example, in the ship **90** performing autopilot control (automatic navigation control).

The navigation control unit **20,** the **AP** operation unit **50,** the sensor **60,** and the display unit **70** are connected to each other by, for example, a data communication network **100** for the ship. The navigation control unit **20** is connected to the switching unit **200.**

The navigation control unit **20** is realized by, for example, a program for executing a function described later, a storage medium for storing the program, and an arithmetic processing unit (which is also referred to as a processing circuitry) for executing the program.

The navigation control unit **20** includes a throttle control unit **22,** a rudder angle control unit **23,** an operation monitoring unit **24,** a ship holding unit **25,** a preliminary adjustment unit **26,** and an intermittent control unit **27.** The ship holding unit **25** and the preliminary adjustment unit **26** constitute an automatic navigation unit.

The first operating device **30** and the second operation device **40** are installed, for example, in the wheelhouse of the ship **90.**

The first operating device **30** is connected to the navigation control unit **20.** The first operating device **30** includes a joystick, and a plurality of operation buttons arranged around the joystick. The first operating device **30** generates an operation input value based on the operation input from the user, and outputs it to the navigation control unit **20** through the input unit **IF.**

The second operation device **40** is connected to the switching unit **200** through the input unit **IF.** The second operation device **40** is, for example, a throttle lever and a steering wheel. The second operation device **40** generates an operation input value based on the operation input from the user and outputs it to the switching unit **200** through the input unit **IF.**

The AP operation unit **50** is implemented by, for example, a touch panel, a physical button or a switch. The **AP** operation unit **50** outputs settings related to high-speed automatic navigation (autopilot) control to the navigation control unit **20.**

The sensor **60** measures the position of the ship **90** equipped with the ship control unit **10,** the state of the ship such as heading and ship speed, and outputs it to the navigation control unit **20.** For example, the sensor **60** is implemented by a positioning sensor using a positioning signal of GNSS (For example, GPS), an inertia sensor (Speed sensor, acceleration sensor, angular speed sensor, etc.), a magnetic sensor, and the like.

The display unit **70** is implemented by a liquid crystal panel, for example. The display unit **70** displays various information related to the ship control and the condition of the ship. The display unit **70** may be omitted, but it is preferable to have the display unit. By having the display unit **70,** the user may easily grasp the status of ship control, condition of the ship and other information.

The propulsion force generation unit **91,** the rudder **92,** and the rudder angle sensor **920** are connected to the navigation control unit **20.** The navigation control unit **20** and the propulsion force generation unit **91** are connected, for example, through a switching unit **200** and a propulsion communication network (CAN, etc.). The navigation control unit **20** and the rudder **92** are connected through the switching unit **200** and an analog or digital communication line. The navigation control unit **20** and the rudder angle sensor **920** are connected, for example, through an analog or digital communication line.

The propulsion force generation unit **91** and the rudder **92** are provided, for example, in an outboard motor, an inboard motor, and various propellers. The rudder mechanism rotates the rudder **92** by, for example, a hydraulic drive system to adjust the rudder angle.

The propulsion force generation unit **91** and the rudder **92** are, for example, each provided in the ship. That is, the ship **90** equipped with the ship control device **10** of the present embodiment is a so-called single-shaft and single-rudder ship (ship). The single-shaft and single-rudder ship (ship) refers to a ship (ship) having a single command system, even if it is multi-engine, and having equipment in which the rudder angle, shift for determining the moving direction, and throttle for determining the moving ship speed are synchronized. The rudder angle is a parameter for controlling the turning direction. The shift is a parameter for controlling the moving direction. The throttle is a parameter for controlling the moving ship speed.

The rudder angle sensor **920** measures the rudder angle (actual rudder angle) of the rudder **92** and outputs it to the navigation control unit **20.**

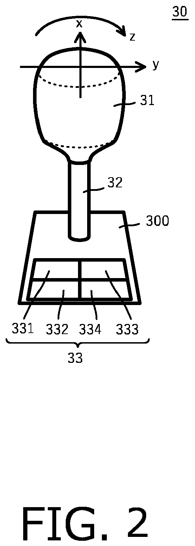

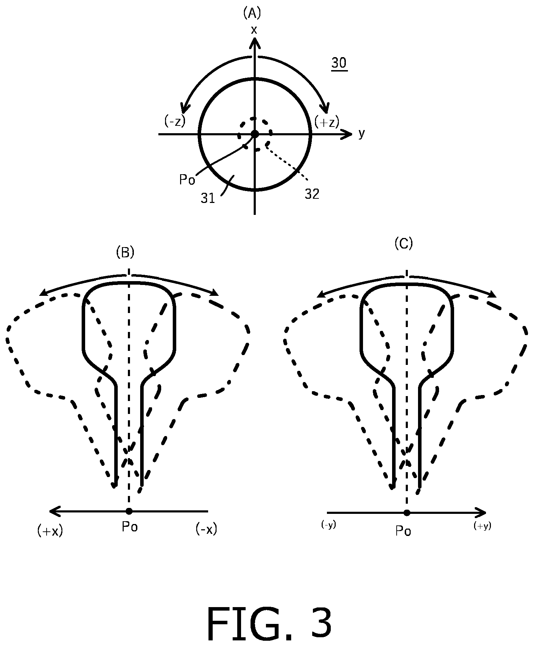

**FIG. 2** is an external perspective view of the joystick. **FIGS. 3 (A), 3 (B),** and **3 (C)** are views for explaining the behavior of the joystick. **FIG. 3 (A)** is a plan view, and **FIGS. 3 (B)** and **3 (C)** are side views.

As shown in **FIG. 2****,** the first operating device **30** includes a joystick (head **31** and shaft **32**) and a group of buttons **33.** The group of buttons **33** includes a plurality of operation buttons **331-334**(**331, 332, 333, 334**). The operation button **332** corresponds to the "first switch" of the present invention, and the operation button **333** corresponds to the "second switch" of the present invention. The operation buttons **333**and **334** correspond to the "third switch" of the present invention.

(Operation input by joystick) The root of the shaft **32** is fixed to a base (For example, the deck of the wheelhouse of ship **90**) in a way that the planar position does not change. The head **31** is attached to the tip of the shaft **32.** A plurality of operation buttons **331-334**constituting the button group **33** are arranged on the base near the root of the shaft **32.**

The position of the tip of the shaft **32,** that is, the position of the head **31,** changes with respect to the root of the shaft **32** through the operation of the head **31** by the user. Specifically, as shown in **FIGS. 3 (B)** and **3 (C)**, a two-dimensional plane orthogonal to the axis of the shaft **32** is set. The default state (neutral state: when the user is not operating the head 31, i.e., the operation stop state) is used as the reference point Po for the position of the base of the shaft 32. The position of the head **31** changes with the operation (operation) of the user on this two-dimensional plane. For example, the position of the head **31** changes, when the user pushes or pulls the head **31** and tilts the shaft **32.**

Furthermore, as shown in **FIG. 3 (A)**, the head **31** has a structure capable of rotating about the axis of the shaft **32.**

The first operating device **30** includes an operation input value generating unit (not shown). The operation input value generating unit is, for example, a sensor for detecting the position of the head **31** on a two-dimensional plane and the amount of rotation of the head **31.** The operation input value generating unit generates an operation input value corresponding to the position of the head **31** and the amount of rotation of the head **31.**

Specifically, the operation input value generating unit detects the position of the head **31** in the direction parallel to the ship heading direction as the position in the x-axis direction, and generates an operation input value (x) based on this position. At this time, for example, the joystick value generating unit sets the forward direction in the +x direction and the backward direction in the -x direction, as shown in **FIG. 3 (B)**.

The operation input value generating unit detects the position of the head **31** in the direction orthogonal to the ship heading direction (right port direction) as the position in the y-axis direction, and generates an operation input value (y) based on this position. At this time, for example, the joystick value generating unit sets the starboard direction (right rotation direction) in the +y direction and the port direction (left rotation direction) in the -y direction, as shown in **FIG. 3 (C)**.

The operation input value generating unit detects the rotation direction and rotation angle (rotation amount) of the head **31,** and generates an operation input value (z) based on the rotation direction and rotation angle. More specifically, the operation input value generating unit detects the rotation direction of the head **31** in a reference state in which the head **31** is not rotated. For example, the joystick value generating unit detects the rotation amount from the reference state in which the clockwise direction (clockwise) is set as the +z direction and the counterclockwise direction (counterclockwise) is set as the -z direction, and generates the operation input value (z), as shown in **FIG. 3 (A)**.

The operation input value generating unit outputs the operation input value (x), the operation input value (y), and the operation input value (z) to the navigation control unit **20.**

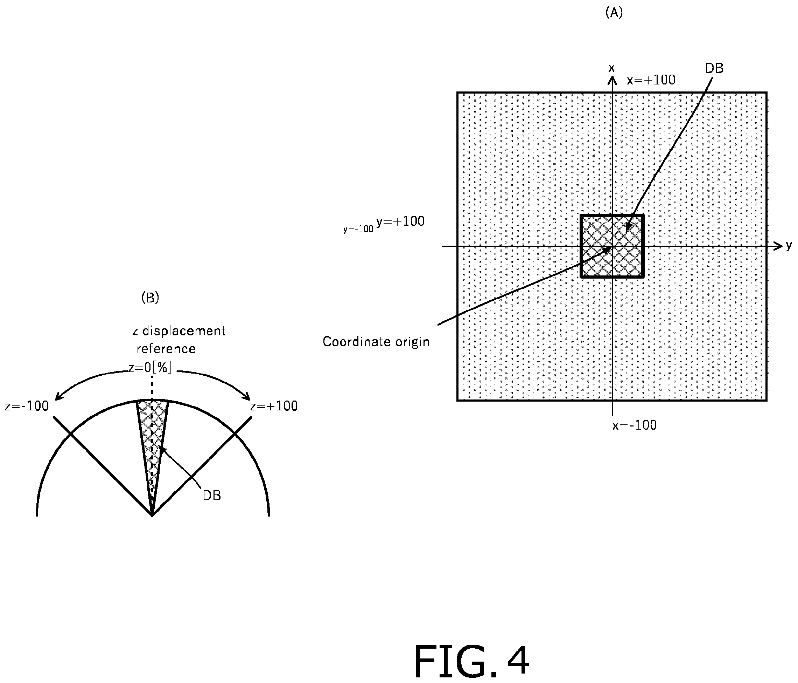

(Operation Input Value (x), Operation Input Value (y), Operation Input Value (z)) **FIG. 4 (A)** is a diagram showing an example of the relationship between the position of the head viewed from a plane and the value of the operation input value (x) and the value of the operation input value (y), and **FIG. 4 (B)** is a diagram showing an example of the relationship between the rotation amount of the head and the value of the operation input value (z).

As shown in **FIG. 4 (A)**, the operation input value (x) is set to x=0 (coordinate origin) when the head **31** is in the default state (shift N). The operation input value (x) is the maximum value +100 when it is furthest from the default position in the forward direction. The operation input value (x) is set in a way that the value becomes larger as the position of the head **31** moves away from the default position in the +x direction in the two-dimensional plane.

The operation input value (x) becomes the minimum value -100 when it is furthest from the default position in the backward direction. The operation input value (x) is set in a way that the value becomes smaller as the position of the head **31** moves away from the default position in the -x direction in the two-dimensional plane.

When the operation input value (x) is within the DB range near 0 (see **FIG. 4 (A)**), the throttle control unit **22** of the navigation control unit **20** sets the shift to N (neutral) and sets the throttle opening to the idle state.

When the operation input value (x) is a positive value (+ value) outside the DB range, the throttle control unit **22** sets the shift to F (forward) in a way that the throttle opening becomes larger as the absolute value of the operation input value (x) increases. When the operation input value (x) is a negative value (- value) outside the DB range, the throttle control unit **22** sets the shift to R (backward) in a way that the throttle opening becomes larger as the absolute value of the operation input value (x) increases. The propulsive force of the ship **90** increases as the throttle opening increases, and the propulsive force of the ship **90** decreases as the throttle opening decreases. That is, the propulsion force is adjusted according to the throttle opening.

As shown in **FIG. 4 (A)**, the maximum value of the operation input value (y) is +100 when the head **31** is furthest from the default position in the starboard direction. The operation input value (y) is set in a way that the value becomes larger as the position of the head **31** moves further away from the default position in the +y direction in the two-dimensional plane.

The minimum value of the operation input value (y) is -100 when the head **31** is furthest from the default position in the port direction. The operation input value (y) is set in a way that the value becomes smaller as the position of the head **31** moves further away from the default position in the -y direction in the two-dimensional plane.

As shown in **FIG. 4 (B)**, the operation input value (z) represents the rotation state (rotation direction and rotation amount) of the head **31,** and the maximum value z=+100 is obtained when the head **31** is most rotated from the default position in the right rotation direction when viewed from the tip side. When rotating to the right, the operation input value (z) is set in a way that the value increases as the amount of rotation from the default state (the absolute value of the rotation angle) increases.

The operation input value (z) becomes the minimum value -100 when the head **31** is rotated the most from the default position in the direction of left rotation when viewed from the front end side. When rotating to the left, the operation input value (z) is set in a way that the value becomes smaller as the amount of rotation (absolute value of rotation angle) from the default state increases.

The rudder angle control unit **23** of the navigation control unit **20** sets the command rudder angle based on the operation input value (y). For example, roughly, the rudder angle control unit **23** sets the command rudder angle to increase as the operation input value (y) increases.

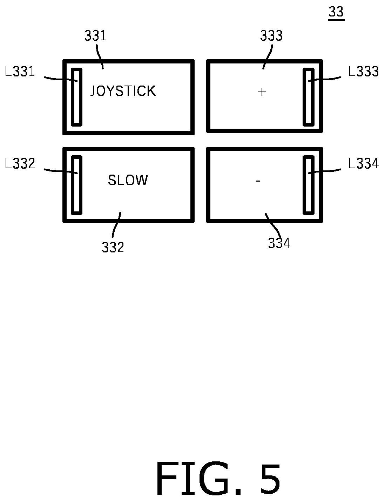

More specifically, when the operation input value (y) is within the DB range near 0 (see **FIG. 5 (A)),** the rudder angle control unit **23** sets the rudder angle to the dead zone and sets the command rudder angle to 0°. When the operation input value (y) is a positive value (+ value) outside the DB range, the rudder angle control unit **23** sets the rudder angle to the right and sets the command rudder angle to increase as the absolute value of the operation input value (y) increases.

When the operation input value (y) is outside the DB range and is a negative value (- value), the rudder angle control unit **23** sets the rudder angle to the left and sets the command rudder angle to increase as the absolute value of the operation input value (y) increases.

(Operation input by operation button group) A plurality of operation buttons **331-334** may be operated by a user by touching with a finger. **FIG. 5** shows an example of a plurality of operation buttons.

The operation button **331** is a button used for selecting to enable or disable joystick operation. For example, if the operation button **331** is operated (For example, touch, press) while the joystick is disabled, the joystick gets enabled. The operation button **331** may be operated when the ship speed is below the switching threshold and the throttle lever, and the joystick are in shift N (neutral). On the other hand, if the operation button **331** is operated while the joystick is enabled, the joystick gets disabled.

The operation button **332** is a button used for selecting to enable or disable the low-speed automatic navigation control mode. For example, when the low-speed manual navigation mode is executed, operating the operation button **332** (For example, touch, press) enables the low-speed automatic navigation control mode. If the operation button **332** is operated while the low-speed automatic navigation control mode is enabled, the low-speed automatic navigation control mode is disabled and the low-speed automatic navigation mode is shifted to the low-speed manual navigation mode.

The operation button **333**is mainly a button for increasing the duty during intermittent throttle control. The operation button **334**is mainly a button for decreasing the duty during intermittent throttle control.

The operation button **334**("-" button) is also used as a start trigger for intermittent throttle control. The operation button **333**("+" button) is also used as an end trigger for intermittent throttle control.

The operation buttons **333**and **334** may also be used to set the maximum throttle opening during manual navigation control in the low-speed navigation control mode. In this case, the throttle control unit **22** sets the throttle opening according to the operation input value (x) of the joystick during the manual navigation control, and in accordance with the operation state of the operation buttons **333**and **334.**

The first ship detects the operation to the plurality of operation buttons **331-334** and outputs the operation result to the navigation control unit **20.**

The operation monitoring unit **24** of the navigation control unit **20** enables the joystick when the operation of the operation button **331** is input while the joystick is disabled. The operation monitoring unit **24** disables the joystick when the operation of the operation button **331** is input while the joystick is enabled.

The operation monitoring unit **24** switches from the high-speed navigation control mode to the low-speed navigation control mode when the operation of the operation button **332** is input during execution of the high-speed navigation control mode. The operation monitoring unit **24** switches from the low-speed navigation control mode to the high-speed navigation control mode when the operation of the operation button **332** is input during execution of the low-speed navigation control mode.

The intermittent control unit **27** sets the intermittent throttle according to the operation state of the operation buttons **333** and **334.**

The operation button **331** is provided with a light-emitting element **L331.** For example, the light-emitting element **L331** lights up when the operation by the joystick is effective and turns off when the operation by the joystick is ineffective.

The operation button **332** is provided with a light-emitting element **L332.** For example, the light-emitting element **L332** lights up when the low-speed automatic navigation control mode is effective (when the low-speed manual navigation mode is ineffective) and turns off when the low-speed automatic navigation control mode is ineffective (when the low-speed manual navigation mode is effective).

The operation button **333** is provided with a light-emitting element **L333,** and the operation button **334** is provided with a light-emitting element **L334.** The light emitting element **L333** lights up and turns off according to the operation state of the operation button **333,** and the light emitting element **L334** lights up and turns off according to the operation state of the operation button **334.**

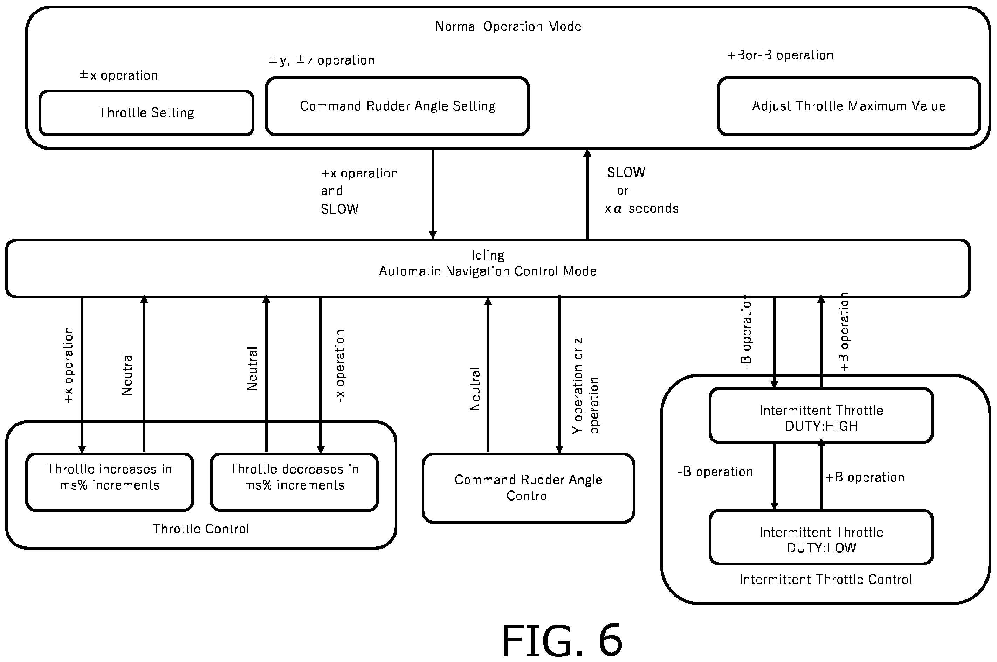

(Relationship of Controls in the Low-Speed Navigation Control Mode) **FIG. 6** is a diagram showing the relationship of controls in the low-speed navigation control mode. The low-speed navigation control mode has two main modes: a normal operation mode and an automatic navigation control mode. In the normal operation mode, the throttle opening and the command rudder angle are set manually according to the operation state of the joystick. In the automatic navigation control mode, the automatic navigation control is performed at the specified throttle opening while keeping the direction in order to hold the heading at that time.

(Normal operation mode) (Throttle opening) In the normal operation mode, the throttle control unit **22** of the navigation control unit **20** sets the throttle opening based on ±x operation (operation input value (x)) of the joystick.

For example, if the operation input value (x) is positive and outside the DB range, the throttle control unit **22** sets shift F (forward) and sets the throttle opening according to the magnitude of the absolute value of the operation input value (x). If the operation input value (x) is negative and out of the DB range, the throttle control unit **22** sets the shift R (backward) and sets the throttle opening according to the magnitude of the absolute value of the operation input value (x).

In the normal operation mode, the throttle control unit **22** adjusts the throttle maximum value based on the operation of the operation buttons **333**and **334.** The throttle maximum value is the throttle opening set when the joystick is operated to +100 or -100. The throttle maximum value may be set in a predetermined number of steps.

For example, the throttle control unit **22** increases the throttle maximum value by a predetermined amount or a predetermined percentage when the operation button **333**is operated. The throttle control unit **22** decreases the throttle maximum value by a predetermined amount or a predetermined percentage when the operation button **334** is operated.

(Command rudder angle) In the normal operation mode, the rudder angle control unit **23** of the navigation control unit **20** sets the command rudder angle based on ±y operation (operation input value (y)) or ±z operation (operation input value (z)) of the joystick.

For example, if the operation input value (y) or the operation input value (z) is a positive value and outside the DB range, the rudder angle control unit **23** sets a right rotation and sets a command rudder angle corresponding to the magnitude of the absolute value of the operation input value (y) or the operation input value (z). If the operation input value (y) or the operation input value (z) is a negative value and outside the DB range, the rudder angle control unit **23** sets a left rotation and sets a command rudder angle corresponding to the magnitude of the absolute value of the operation input value (y) or the operation input value (z).

(Switching Between the Normal Operation Mode and the Automatic Navigation Control Mode) In the normal operation mode, if the joystick is +x operated (tilting forward) and the operation button **332** is operated, and then the joystick is held in a neutral state (position of the reference point Po or within the DB range) for a predetermined time (the operation is stopped), the operation monitoring unit **24** detects this operation and the automatic navigation unit shifts from the normal operation mode to the automatic navigation control mode.

Thus, the ship control device **10** may shift from the normal operation mode to the automatic navigation control mode with a simple operation. Moreover, since the combination of the operation of the joystick and the operation of the operation button **332** is used, the ship control device **10** may suppress an undesired shift from the normal operation mode to the automatic navigation control mode with a simple combination of simple operations.

In the automatic navigation control mode, an initial throttle opening is set. The initial throttle opening degree is the throttle opening degree at the time of idling, so called, the throttle opening degree at the time of dead slow. The throttle opening degree at the time of idling is, for example, the minimum throttle opening degree at which the propulsion force generation unit 91 does not stop when the clutch is connected to the propulsion force generation unit **91** (e.g., engine) (loaded state). The initial propulsion force is determined by the initial throttle opening degree.

The preliminary adjusting unit **26** of the automatic navigation portion gradually changes the throttle opening degree from the throttle opening degree at the time of switching operation from the normal operation mode to the automatic navigation control mode to the initial throttle opening degree. The rate of change is set, for example, by a linear function, but is not limited thereto.

Thus, the rapid change in the ship speed at the time of the transition from the normal operation mode to the automatic navigation control mode may be suppressed. Therefore, the safety and riding comfort of the user are improved.

In addition, the ship holding unit **25** of the automatic navigation unit does not manually change the heading during the switching operation from the normal operation mode to the automatic navigation control mode, and may suppress the sudden change of hands caused by the switching from the normal operation mode to the automatic navigation control mode. Therefore, the safety and riding comfort of the user may be improved, and the bow may be suppressed from turning in a direction not intended by the user.

When the operation button **332** is operated in the automatic navigation control mode, the operation monitoring unit **24** detects this, and the automatic navigation unit shifts from the automatic navigation control mode to the normal operation mode.

Alternatively, when the joystick is held in a predetermined range close to the maximum value for a predetermined time during the automatic navigation control mode, the operation monitoring unit **24** detects this, and the automatic navigation unit shifts from the automatic navigation control mode to the normal operation mode. The predetermined range at this time is, for example, x between -95 and -100, and the predetermined time is, for example, 2 seconds.

Thus, the ship control device **10** may shift from the automatic navigation control mode to the normal operation mode with a simple operation. In the case of the joystick operation, the undesirable shift from the automatic navigation control mode to the normal operation mode may be suppressed by limiting the designated range to a narrow range near the maximum value on the negative value side and providing a holding time.

(Automatic navigation control mode) The ship holding unit **25** starts the control by the automatic navigation control mode when it detects that the throttle opening of idling or the ship speed corresponding to the throttle opening of idling is reached. Basically, the automatic navigation control mode holds the throttle opening set. Moreover, the automatic navigation control mode automatically adjusts the command rudder angle in order to hold (hold) the heading. That is, the automatic navigation control performs the ship holding control.

Based on such schematic control, the automatic navigation control mode performs the following control.

(Adjustment of throttle opening) In the automatic navigation control mode, if +x operation (forward inclination operation) is performed on the joystick and the range is out of the DB range, the operation monitoring unit **24** detects this and the ship holding unit **25** increases the set value of the throttle opening by ms%. When the joystick is returned to the neutral state, the operation monitoring unit **24** detects this and the ship holding unit **25** reflects the increased throttle opening on the setting of the automatic navigation control mode.

In the automatic navigation control mode, if the joystick is out of the DB range by the -x operation (inclination operation in the backward direction), the operation monitoring unit **24** detects this and the ship holding unit **25** decreases the set value of the throttle opening by ms%. When the joystick is returned to the neutral state, the operation monitoring unit **24** detects this and the ship holding unit **25** reflects the reduced throttle opening to the setting of the automatic navigation control mode.

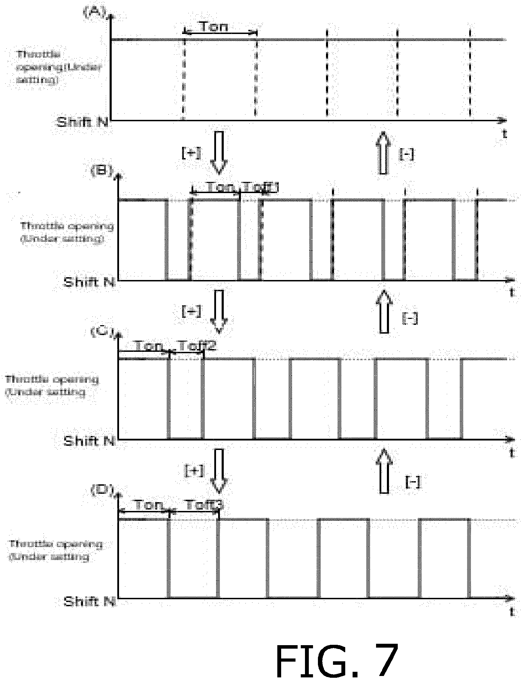

(Intermittent Throttle Control) **FIG. 7 (A)** shows an example of the time variation of the throttle opening in the normal throttle control, and **FIGS. 7 (B), 7 (C)****,** and **7 (D)** show an example of the time variation of the throttle opening in the multi-step intermittent throttle control.

As shown in **FIG. 7 (A)**, in the normal throttle control, the throttle opening which is not 0 is always held constant. As shown in **FIGS. 7 (B), 7 (C)**, and **7 (D)**, in the intermittent throttle control, an on-time Ton in which the throttle opening which is not 0 is held and an off-time Toff in which the throttle opening which is 0 is held are set with a predetermined time length as one period of the intermittent throttle control.

Then, in each control cycle, the length of the off-time Toff is adjusted while keeping the on-time Ton constant. The length of the on-time Ton relative to the control cycle at this time is the DUTY of the intermittent throttle control. The length of the on-time Ton is, for example, set to a length that ensures the minimum required propulsion. By adjusting the DUTY, as shown in **FIGS. 7 (B), 7 (C)****,** and **7 (D),** the length of the on-time in one cycle is adjusted, and the actual throttle opening (the average throttle opening in one cycle) is adjusted.

The number of adjustment stages of the intermittent throttle control in the automatic navigation control mode is set in a plurality of stages. For example, in **FIGS. 7 (B)**, **7 (C)**, and **7 (D)**, it is set in three stages. It should be noted that the number of adjustment stages is not limited to three, and fine adjustment is possible as the number of adjustment stages increases. However, since the idling throttle opening is the standard and the speed is low, it is difficult to understand the difference in the actual throttle opening in each stage even if the number of adjustment stages is too large. Therefore, it is convenient to set in about three stages.

When the operation button **334**("-" button) is operated in the automatic navigation control mode, the operation monitoring unit 24 detects this, and the intermittent control unit **27** shifts to the intermittent throttle control. At this time, the intermittent throttle control is shifted to the intermittent throttle control having the highest DUTY (shorter Toff time) in the intermittent throttle control set in a plurality of stages.

Thereafter, the intermittent control unit **27** shifts to the intermittent throttle control having a lower DUTY (longer Toff time) every time the operation button **334**("-" button) is operated.

On the other hand, the intermittent control unit **27** shifts to the intermittent throttle control having a higher DUTY every time the operation button **333**("+" button) is operated. When the operation button **333**("+" button) is operated in the intermittent throttle control having the highest DUTY, the operation monitoring unit **24** detects this and the intermittent control unit **27** shifts from the intermittent throttle control to the normal throttle control.

Thus, the ship control device **10** may set the intermittent throttle control by a simple operation.

Furthermore, the ship control device **10** may shift from the normal throttle control to the intermittent throttle control by using the operation button **334**("-" button) for switching the intermittent throttle control of a plurality of stages. Thus, the user may easily understand the transition operation from the normal throttle control to the intermittent throttle control while suppressing the increase in the number of operation buttons.

In addition, the ship control device **10** may shift from the intermittent throttle control to the normal throttle control by using the operation button **333**("+" button) for switching between the intermittent throttle control of a plurality of stages. Thus, the user may easily understand the transition operation from the intermittent throttle control to the normal throttle control while suppressing the increase in the number of operation buttons.

(Command rudder angle control) In the automatic navigation control mode, if ±y operation (lateral tilt operation) or ±z operation (twist operation of the head **31**) is performed on the joystick and the range is out of the DB range, the operation monitoring unit **24** detects this and the ship holding unit **25** suspends the direction holding control and shifts to the control for manually setting the command rudder angle.

The rudder angle control unit **23** sets the command rudder angle based on the operation state (operation input value (y) or operation input value (z)) of the joystick. When the joystick is returned to the neutral state, the operation monitoring unit **24** detects this and the ship holding unit **25** resumes the direction holding control in order to hold the heading at that time.

Thus, the ship control device **10** may adjust the heading in the automatic navigation control mode with easy operation.

In this way, the ship control device **10** realizes the change of the throttle opening and the adjustment of the command rudder angle in the automatic navigation control mode by combining the front/rear, left/right, and twist operations of the joystick and returning the joystick to the neutral state (operation stop state). In other words, the ship control device **10** changes the throttle opening and the adjustment of the command rudder angle in the automatic navigation control mode with the neutral state (operation stop state) of the joystick as a trigger after the front/rear, left/right, and twist operations of the joystick.

Thus, the ship control device **10** may realize the change of the throttle opening and the adjustment of the command rudder angle in the automatic navigation control mode by clearly reflecting the intention of the user. In other words, the ship control device **10** may suppress the change of the throttle opening and the adjustment of the command rudder angle in the automatic navigation control mode undesired by the user.

In addition, the ship control device **10** enables the adjustment of the throttle opening in the automatic navigation control mode by temporarily putting the joystick in the neutral state (operation stop state) after the operation of the operation button **332** during the transition from the normal operation mode to the automatic navigation control mode. Thus, the ship control device **10** may clearly separate the adjustment of the throttle opening in the normal operation mode from the adjustment of the throttle opening in the automatic navigation control mode. In other words, the ship control device **10** may suppress the shift from the normal operation mode to the automatic navigation control mode which is not desired by the user.

The navigation control unit **20** may also perform the following control.

When the operation monitoring unit **24** detects the operation stationary state in which the specific operation state of the joystick does not change for a predetermined time, the ship holding unit **25** holds the throttle opening or the propulsion force at the time of detection by the operation monitoring unit **24.**

For example, when the maximum operation (+100) of the +x operation of the joystick is performed and is held, the operation monitoring unit **24** detects that this operation is held, and the ship holding unit **25** holds the throttle opening or the propulsion force at this time (the time of detection by the operation monitoring unit **24**).

Thus, the user may easily hold the desired throttle opening and propulsion force (ship speed).

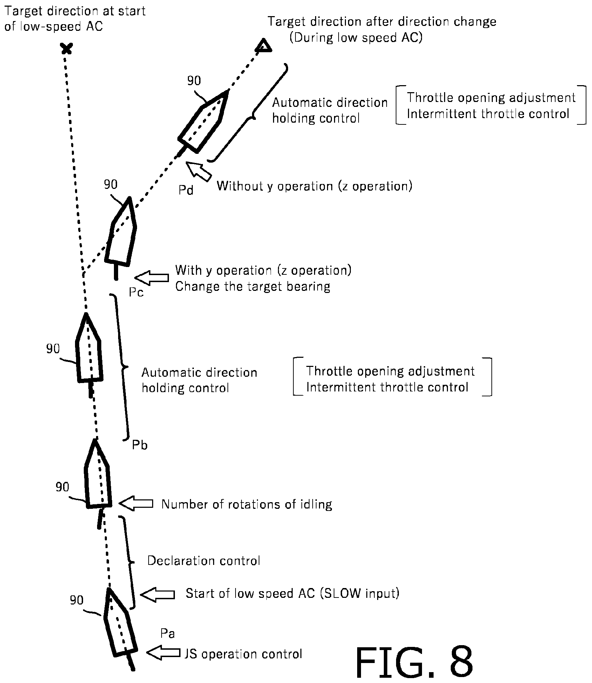

**FIG. 8** is a diagram showing an example of the behavior of the ship in the low-speed navigation control mode. **FIG. 8** shows a state of shifting from the joystick operation control (manual navigation mode) to the automatic navigation control mode. In the explanation of **FIG. 8****,** the navigation control unit **20** is used as the subject, but each control is performed by the above-described function units that constitute the navigation control unit **20.**

First, at time Pa, the manual navigation mode using the joystick is executed. Then, when the user operates the operation button **332** ("SLOW" button), the automatic navigation control mode (low speed AC) is started. At this time, the navigation control unit **20** automatically controls the command rudder angle in a way that the heading at the start timing of the automatic navigation control mode is held as the target heading.

Then, the navigation control unit **20** gradually decreases the throttle opening in order to reach the idling speed. Thus, the ship gradually decelerates.

When the throttle opening corresponding to the idling speed is reached (time Pb), the navigation control unit **20** performs automatic direction holding control in a way that the throttle opening is held, and the heading is directed to the target bearing.

At this time, as described above, when the user operates the joystick in the forward and backward directions, the navigation control unit **20** adjusts the adjustment of the maximum value of the throttle opening based on the operation input value (x) obtained by operating the joystick in the forward and backward directions. When the user operates the operation buttons **333**and **334**, the navigation control unit **20** performs intermittent throttle control.

When lateral operation or twisting operation of the joystick is performed (time Pc) during automatic direction holding control, the navigation control unit **20** interrupts the automatic direction holding control. The navigation control unit **20** manually adjusts the command rudder angle based on the operation input value (y) obtained by lateral operation of the joystick or the operation input value (z) obtained by twisting operation. At this time, the navigation control unit **20** discards the target bearing so far.

When the lateral or twisting operation of the joystick is completed and the state of neutral (operation stop state) is reached, the navigation control unit **20** automatically controls the command rudder angle in order to hold the heading at this timing as the target heading.

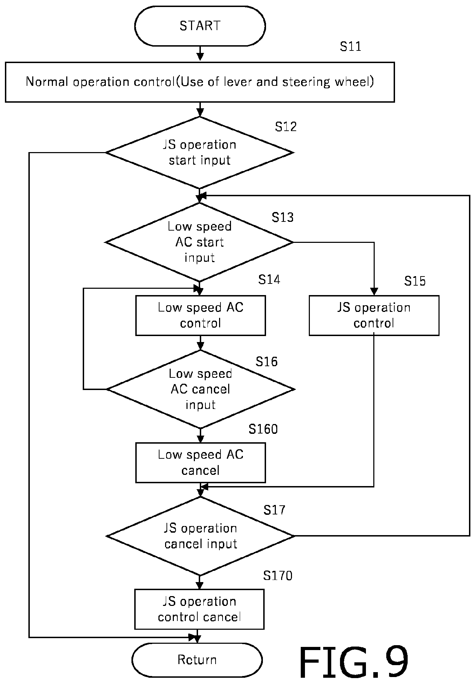

(Ship Control Method) **FIG. 9** is a flowchart showing a schematic process of the ship control method according to the embodiment of the present invention. In the description of each control (process) shown in **FIG. 9** and subsequent figures, the details described in the above configuration are omitted. In **FIG. 9** and subsequent figures, "AC" means the automatic navigation control mode of the low-speed navigation control mode, and " JS " means the joystick.

In the description of **FIG. 9** and subsequent figures, the subject of the process is mainly "the ship control unit **10**" or"the navigation control unit **20** ", but in more detail, the process is executed by the above-described functional units.

The ship control device **10** executes the normal operation control (high-speed navigation control mode) (S11). At this time, a throttle lever and a steering wheel are used.

When detecting the operation start input (operation button **331**) by the joystick (S12: YES), the ship control device **10** shifts to the low-speed navigation control mode (normal operation mode). At this time, the ship control device **10** accepts the operation to the operation button **331** only when the throttle lever and the joystick are at shift N.

Thus, the ship control device **10** may suppress the unintentional shift to the low-speed navigation control mode by the negative desired operation to the operation button **331.** If the ship control device **10** does not accept the operation start input (operation button **331**) by the joystick (S12: NO), the high-speed navigation control mode is retained.

When the ship control device **10** detects an operation input (Forward tilt operation of the joystick and operation button **332** ("SLOW" button)) for starting the automatic navigation control mode in the low-speed navigation control mode (S13: YES), the ship control device shifts to the automatic navigation control mode (S14). If the operation input of the automatic navigation control mode is not accepted (S13: NO), the ship control device **10** executes a manual operation control mode using a joystick (S15).

The ship control device **10** cancels the automatic navigation control mode (S160) when an operation input (Retry the operation button **332** or hold the maximum backward tilt operation of the joystick for a predetermined time.) for canceling the automatic navigation control mode is detected (S16: YES).

The ship control device **10** cancels the low-speed navigation control mode using the joystick (S170) and switches to the high-speed navigation control mode when detecting an operation input (re-operation of the operation button **331**) for releasing the low-speed navigation control mode (normal operation mode) using the joystick (S17: YES). At this time, the ship control device **10** switches to the high-speed navigation control mode only when the throttle lever is at shift N. Thus, the ship control device **10** may prevent a sudden advance and a sudden backward movement after switching to the high-speed navigation control mode.

The ship control device **10** holds the low-speed navigation control mode until detecting an operation input (re-operation of the operation button **331**) for releasing the low-speed navigation control mode using the joystick (S17: NO).

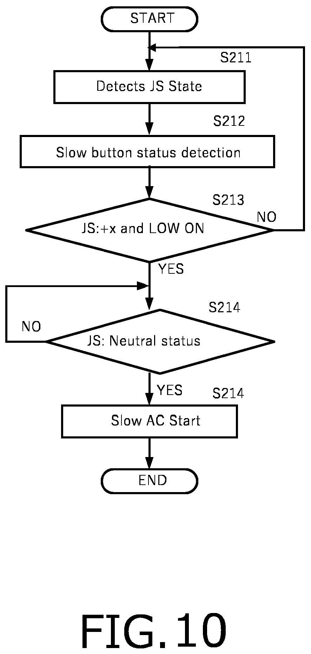

(Transition from the manual operation mode to the automatic navigation control mode in the low-speed navigation control mode) **FIG. 10** is a flowchart of the transition from the manual operation mode to the automatic navigation control mode in the low-speed navigation control mode.

The navigation control unit **20** detects the operating state of the joystick (S211). The navigation control unit **20** detects the state of the operation button **332** ("SLOW" button) (S212).

The navigation control unit **20** detects whether the joystick is in the neutral state (operation stop state) when the joystick is in the forward inclination operating state (+x operation state) and the operation button **332** ("SLOW" button) is operated to the ON state (S213: YES). On the other hand, the navigation control unit **20** continues the manual operation mode if the joystick is in the forward inclination operating state (+x operation state) and the operation button **332** ("SLOW" button) is not in the ON state (S213: NO).

If the joystick is in the neutral state (operation stop state) (S214: YES), the navigation control unit **20** shifts to the automatic navigation control mode (S215). On the other hand, if the joystick is not in the neutral state (operation stop state) (S214: NO), the navigation control unit **20** waits for the shift to the automatic navigation control mode. More specifically, if the operation button **332** ("SLOW" button) is in the ON state, the navigation control unit **20** adjusts the initial throttle opening (initial adjustment of the throttle opening) described later. After that, when the joystick is in the neutral state (operation stop state), the navigation control unit **20** enables the adjustment of the throttle opening in the automatic navigation control mode. On the other hand, the navigation control unit **20** does not enable the adjustment of the throttle opening in the automatic navigation control mode until the joystick becomes the neutral state (operation stop state).

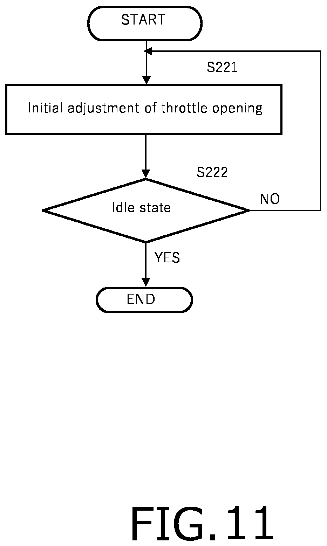

(Adjustment of the Initial Throttle Opening in the Automatic Navigation Control Mode) **FIG. 11** is a flowchart of the adjustment of the initial throttle opening in the automatic navigation control mode.

When the navigation control unit **20** detects the switching operation to the automatic navigation mode, the navigation control unit performs the initial adjustment of the throttle opening in a way that the throttle opening becomes the preset initial throttle opening as described above (S221). The initial throttle opening is the throttle opening corresponding to the idling state.

The navigation control unit **20** gradually decreases the throttle opening until the initial throttle opening is reached (S222: NO). When the initial throttle opening is reached (S 222: YES), the navigation control unit **20** substantially starts the automatic navigation mode.

At this time, the navigation control unit **20** may obtain the ship speed and adjust the throttle opening and substantially start the automatic navigation control mode depending on whether the ship speed is in the idling state.

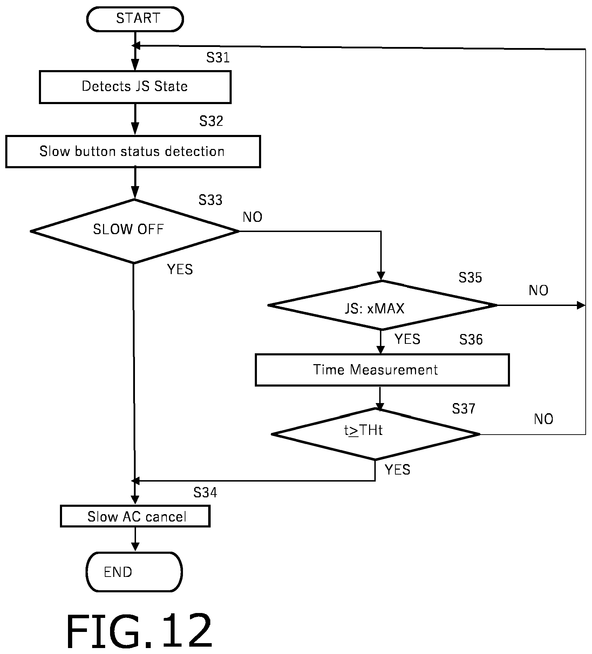

(Canceling the Automatic Navigation Control Mode) **FIG. 12** is a flowchart for canceling the automatic navigation control mode.

The navigation control unit **20** detects the operating state of the joystick in the automatic navigation control mode (S31). The navigation control unit **20** detects the operating state of the operation button **332** ("SLOW" button) in the automatic navigation control mode (S212).

When the operation button **332** is operated to the OFF state (S213: YES), the navigation control unit **20** cancels the automatic navigation control mode (S34).

Even if the operation button **332** is not operated to the OFF state (S213: NO), the navigation control unit **20** performs timing (S36) if the joystick is tilted close to the maximum in the backward operation (S35: YES). On the other hand, the navigation control unit **20** continues the automatic navigation control mode when the operation button **332** is not operated in the OFF state (S213: NO) and the joystick is not tilted close to the maximum in the backward operation (S35: NO).

The navigation control unit **20** performs time counting, and if the operation state of the joystick is held for a predetermined time (YES at S 37), cancels the automatic navigation control mode (S34). The navigation control unit **20** continues the automatic navigation control mode if the operation state of the joystick is not held for a predetermined time (NO at S 37).

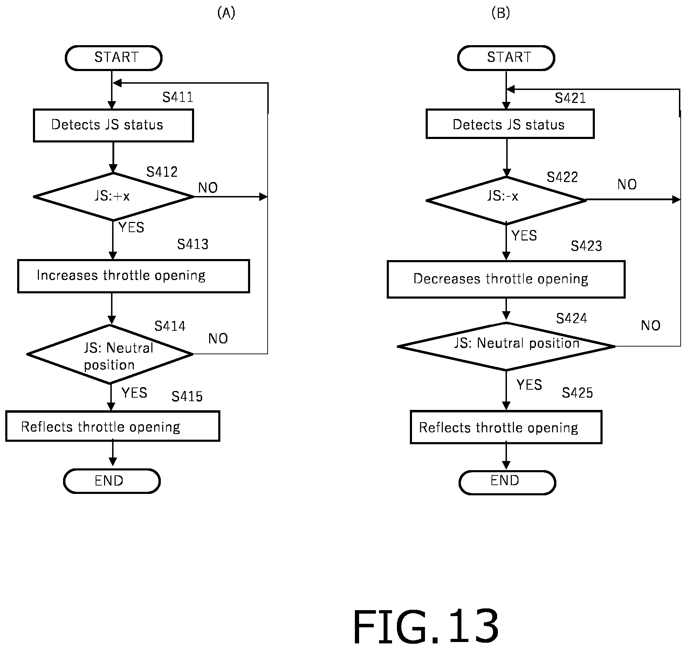

(Adjustment of Throttle Opening in the Automatic Navigation Control Mode) **FIGS. 13 (A)** and **13 (B)** are flowcharts for adjusting the throttle opening in the automatic navigation control mode. **FIG. 13 (A)** shows a case where the throttle opening is increased, and **FIG. 13 (B)** shows a case where the throttle opening is decreased.

(Increase of the throttle opening: **FIG. 13 (A)**) The navigation control unit **20** detects the operation state of the joystick in the automatic navigation control mode (S411). If the joystick is tilted forward (+x operation) (S412: YES), the navigation control unit **20** increases the throttle opening (S413). If the joystick is not tilted forward (+x operation) (S412: NO), the navigation control unit **20** holds the throttle opening.

If the joystick is in a neutral state (S414: YES), the navigation control unit **20** reflects the increased throttle opening to the throttle opening of the automatic navigation mode (S415). On the other hand, if the joystick is not in a neutral state (S414: NO), the increased throttle opening is not reflected in the throttle opening of the automatic navigation mode.

(Reduction of throttle opening: **FIG. 13 (B)**) The navigation control unit **20** detects the operating state of the joystick in the automatic navigation control mode (S421). If the joystick is tilted backward (-x operation) (S422: YES), the navigation control unit **20** decreases the throttle opening (S423). If the joystick is not tilted backward (-x operation) (S422: NO), the navigation control unit **20** holds the throttle opening.

If the joystick is in a neutral state (S424: YES), the navigation control unit **20** reflects the reduced throttle opening to the throttle opening in the automatic navigation mode (S425). On the other hand, if the joystick is not in the neutral state (S424: NO), the reduced throttle opening is not reflected to the throttle opening in the automatic navigation mode.

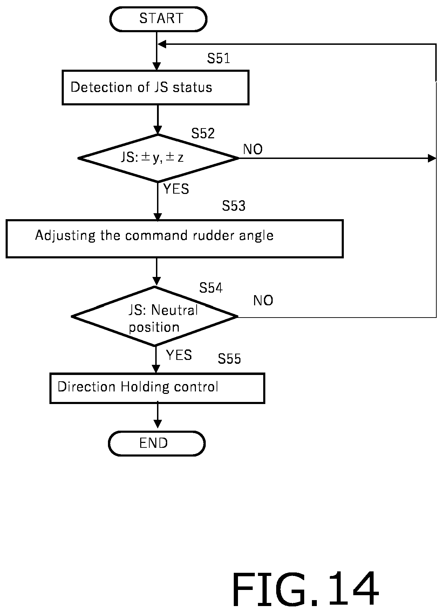

(Adjusting the command rudder angle in the automatic navigation mode) **FIG. 14** is a flowchart for adjusting the command rudder angle in the automatic navigation control mode.

The navigation control unit **20** detects the operating state of the joystick in the automatic navigation control mode (S51). If the joystick is tilted (±y operation) or twisted (±z operation) in the lateral direction (S52: YES), the navigation control unit **20** suspends the direction holding control in the automatic navigation control and adjusts the command rudder angle (S53). At this time, the navigation control unit **20** does not change the throttle opening unless the throttle opening is adjusted by the joystick. On the other hand, if the joystick is not tilted (±y operation) or twisted (±z operation) in the lateral direction (S52: NO), the navigation control unit **20** continues the automatic navigation control (throttle opening holding and direction holding control).

If the joystick returns to the neutral state (S54: YES), the navigation control unit **20** returns to the automatic navigation control (throttle opening holding and direction holding control) (S55). On the other hand, the navigation control unit **20** continues adjusting the command rudder angle by the joystick operation until the joystick returns to the neutral state (S54: NO).

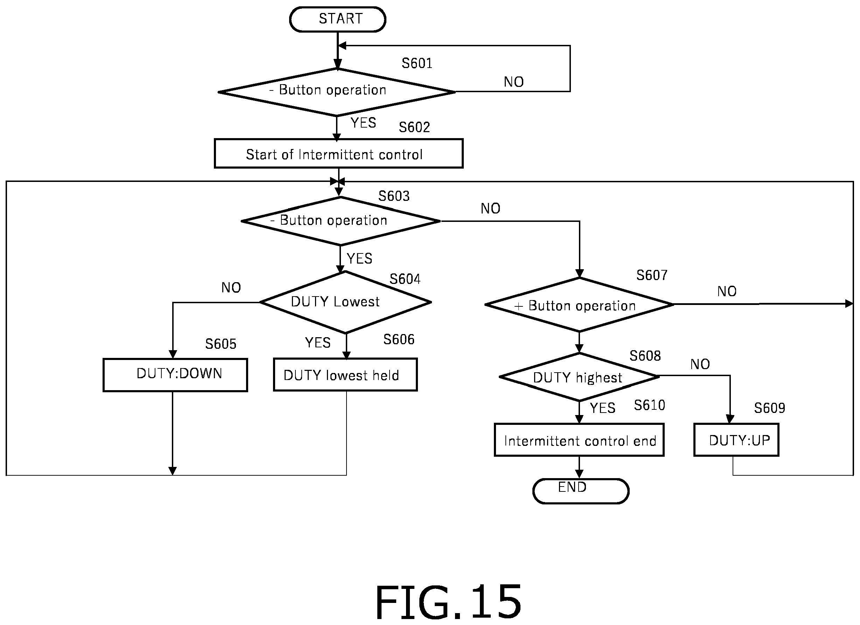

(Intermittent throttle control) **FIG. 15** is a flowchart for intermittent throttle control in the automatic navigation control mode.

When the navigation control unit **20** detects the operation of the operation button **334**("-" button) in the automatic navigation control mode (S601: YES), it starts the intermittent throttle control (S602). On the other hand, when the navigation control unit **20** does not detect the operation of the operation button **334**("-" button) in the automatic navigation control mode (S601: NO), it does not start the intermittent throttle control.

After starting the intermittent throttle control, the navigation control unit **20** detects the operation of the operation button **334**("-" button) (S603: YES), and if the DUTY is not the lowest (S604: NO), it reduces the DUTY (S605). The navigation control unit **20** detects the operation of the operation button **334**("-" button) (S603: YES), and if the DUTY is the lowest (S604: YES), it holds the state of the lowest DUTY (S606).

After the start of the intermittent throttle control, the navigation control unit **20** does not detect the operation of the operation button **334**("-" button) (S603: NO), detects the operation of the operation button **333**("+" button) (S607: YES), and raises the DUTY if the DUTY is not the highest (S608: NO) (S609).

The navigation control unit **20** does not detect the operation of the operation button **334**("-" button) (S603: NO), detects the operation of the operation button **333**("+" button) (S607: YES), and terminates the intermittent throttle control if the DUTY is the highest (S608: YES) (S610).

The navigation control unit **20** retains the current DUTY if the operation of the operation button **334**("-" button) is not detected (S603: NO) and the operation of the operation button **333**("+" button) is not detected (S607: NO).

In the above description, the case of automatic navigation control (ship holding control) for moving forward at low speed is shown, but the above-described configuration and control may also be applied to moving backward at low speed.

### Reference Signs List

1: Ship control system
10: Ship control device
20: Navigation control unit
22: Throttle control unit
23: Rudder angle control unit
24: Operation monitoring unit
25: Ship holding unit
26: Preliminary adjustment unit
27: Intermittent control unit
30: First operation device
31: Head
32: Shaft
33: Buttons
40: Second operation device
50: AP operation unit
60: Sensor
70: Display unit
90: Ship
91: Propulsion force generation unit
92: Rudder
100: Data communication network
200: Switching unit
331, 332, 333, 334: Operation button
920: Rudder angle sensor
IF: Input unit
L331, L332, L333, L334: Light emitting element

## Claims

1. A ship control device (10), comprising:
an input unit (IF) configured to input an operating position of an operating device for controlling a moving direction or propulsion force of the ship (90);
an operation monitoring unit (24) configured to detect an operation stationary state in which the operating position does not change for a predetermined time; and
a ship holding unit (25) configured to perform ship holding control for holding a behavior of the ship (90) in case a ship holding condition comprising a detection of the operation stationary state is satisfied, **characterized in that**
the operating device comprises a second switch for receiving an operation of intermittent control of the propulsion force,
the ship control device further comprises;
an intermittent control unit (27) configured to start the intermittent control based on the operation of the second switch during the ship holding control.

2. The ship control device (10) of claim 1,
wherein the operating device comprises:
a joystick configured to be capable of performing forward operation, neutral and backward operation according to the operating position,
wherein the operation monitoring unit (24) is further configured to detect the operation stationary state in which the operating position corresponding to the forward operation or the backward operation by the joystick does not change for the predetermined time, and
the ship holding unit (25) is further configured to hold the propulsion force at the time the detection occurs.

3. The ship control device (10) of claim 1,
wherein the operating device comprises a joystick,
the operation monitoring unit (24) is further configured to detect the operation stationary state in case the operating position of the joystick remains in neutral, and
the ship holding unit (25) is further configured to hold the movement direction at the time the detection occurs.

4. The ship control device (10) of claim 1,
wherein the operating device comprises a first switch for receiving switching from manual navigation to automatic navigation, and
the ship control device (10) further comprises an automatic navigation unit, comprising:
a preliminary adjustment unit (26) configured to set a target value of the propulsion force to an initial propulsion force for holding the ship, upon detecting a switching operation to automatic navigation by the first switch,
wherein the ship holding unit (25) is further configured to perform the ship holding control for holding the initial propulsion force after the propulsion force of the ship becomes the initial propulsion force.

5. The ship control device (10) of claim 4,
wherein the preliminary adjustment unit (26) is further configured to approach the initial propulsion force for holding the ship (90) while adjusting an acceleration from the propulsion force at that time, upon detecting the switching to the automatic navigation by the first switch.

6. The ship control device of claim 4,
wherein the operation monitoring unit (24) is further configured to detect the operation stationary state in case the operating position of the joystick remains in neutral, after a start of the ship holding control for holding the initial propulsion force, and
the ship holding unit (25) is further configured to hold the movement direction at the time the detection occurs.

7. The ship control device (10) of any one of claims 4 to 6,
wherein the ship holding unit (25) is further configured to adjust the propulsion force at the time of the ship holding control based on an operation of the joystick in the bow-stern direction during the ship holding control.

8. The ship control device (10) of any one of claims 1 to 7,
wherein the intermittent control unit (27) is further configured to switch a control pattern of the intermittent control based on an operation of a third switch which accepts an operation of switching the control pattern of the intermittent control in the operating device.

9. The ship control device (10) of claim 8,
wherein the second switch also serves as the third switch.

10. The ship control device (10) of any one of claims 4 to 7,
wherein the ship holding unit (25) is further configured to cancel the ship holding control in case an operation of the first switch is detected during the ship holding control.

11. The ship control device (10) of any one of claims 2 to 10,
wherein the ship holding unit (25) is further configured to cancel the ship holding control in case an operation of the joystick to a predefined ship holding control cancel state is detected.

12. The ship control device (10) of any one of claims 1 to 11,
wherein the behavior of the ship (90) comprises the direction of movement comprising a rudder angle or a course of the ship, or the propulsion comprising a throttle opening, an engine speed, and a speed of the ship.

13. A ship control method, comprising:
inputting an operating position of an operating device for controlling a moving direction or propulsion force of the ship (90);
detecting an operation stationary state in which the operating position does not change for a predetermined time based on a time variation in the operating position; and
performing ship holding control for holding a behavior of the ship in case a ship holding condition comprising a detection of the operation stationary state is satisfied,
**characterized by** starting intermittent control of the propulsion force based on an operation of a second switch during the ship holding control.

14. A ship control program, comprising instructions which, when the program is executed by a computer, cause the computer to carry out the steps of:
inputting an operating position of an operating device for controlling a moving direction or propulsion force of the ship;
detecting an operation stationary state in which the operation position does not change for a predetermined time based on a time variation in the operation position; and
performing ship holding control for holding a behavior of the ship in case a ship holding condition comprising a detection of the operation stationary state is satisfied,
**characterized by** starting intermittent control of the propulsion force based on an operation of a second switch during the ship holding control.

## Patentansprüche

1. Schiffssteuervorrichtung (10), aufweisend:
eine Eingabeeinheit (IF), die konfiguriert ist, um eine Betriebsposition einer Betriebsvorrichtung zum Steuern einer Bewegungsrichtung oder Antriebskraft des Schiffs (90) einzugeben;
eine Betriebsüberwachungseinheit (24), die konfiguriert ist, um einen stationären Betriebszustand zu erfassen, in dem sich die Betriebsposition für eine vorbestimmte Zeit nicht ändert; und
eine Schiffshalteeinheit (25), die konfiguriert ist, um eine Schiffshaltesteuerung zum Halten eines Verhaltens des Schiffs (90) durchzuführen, falls eine Schiffshaltebedingung, die eine Erfassung des stationären Betriebszustands aufweist, erfüllt ist, **dadurch gekennzeichnet, dass**
die Betriebsvorrichtung einen zweiten Schalter zum Empfangen eines Betriebs einer intermittierenden Steuerung der Antriebskraft aufweist,
die Schiffssteuervorrichtung ferner aufweist:
eine intermittierende Steuereinheit (27), die konfiguriert ist, um die intermittierende Steuerung basierend auf dem Betrieb des zweiten Schalters während der Schiffshaltesteuerung zu starten.

2. Schiffssteuervorrichtung (10) nach Anspruch 1,
wobei die Betriebsvorrichtung aufweist:
einen Joystick, der konfiguriert ist, um in der Lage zu sein, einen Vorwärtsbetrieb, einen neutralen Betrieb und einen Rückwärtsbetrieb gemäß der Betriebsposition durchzuführen,
wobei die Betriebsüberwachungseinheit (24) ferner konfiguriert ist, um den stationären Betriebszustand zu erfassen, in dem sich die Betriebsposition, die dem Vorwärtsbetrieb oder dem Rückwärtsbetrieb durch den Joystick entspricht, für die vorbestimmte Zeit nicht ändert, und
die Schiffshalteeinheit (25) ferner konfiguriert ist, um die Antriebskraft zu dem Zeitpunkt zu halten, zu dem die Erfassung stattfindet.

3. Schiffssteuervorrichtung (10) nach Anspruch 1,
wobei die Betriebsvorrichtung einen Joystick aufweist,
die Betriebsüberwachungseinheit (24) ferner konfiguriert ist, um den stationären Betriebszustand zu erfassen, falls die Betriebsposition des Joysticks neutral bleibt, und
die Schiffshalteeinheit (25) ferner konfiguriert ist, um die Bewegungsrichtung zu dem Zeitpunkt zu halten, zu dem die Erfassung stattfindet.

4. Schiffssteuervorrichtung (10) nach Anspruch 1,
wobei die Betriebsvorrichtung einen ersten Schalter zum Empfangen eines Schaltens von einer manuellen Navigation zu einer automatischen Navigation aufweist, und
die Schiffssteuervorrichtung (10) ferner eine automatische Navigationseinheit aufweist, aufweisend:
eine vorläufige Einstelleinheit (26), die konfiguriert ist, um einen Zielwert der Antriebskraft auf eine anfängliche Antriebskraft zum Halten des Schiffs einzustellen, wenn ein Schaltbetrieb zu einer automatischen Navigation durch den ersten Schalter erfasst wird,
wobei die Schiffshalteeinheit (25) ferner konfiguriert ist, um die Schiffshaltesteuerung zum Halten der anfänglichen Antriebskraft durchzuführen, nachdem die Antriebskraft des Schiffs die anfängliche Antriebskraft wird.

5. Schiffssteuervorrichtung (10) nach Anspruch 4,
wobei die vorläufige Einstelleinheit (26) ferner konfiguriert ist, um sich der anfänglichen Antriebskraft zum Halten des Schiffs (90) anzunähern, während eine Beschleunigung von der Antriebskraft zu diesem Zeitpunkt eingestellt wird, wenn das Schalten zu der automatischen Navigation durch den ersten Schalter erfasst wird.

6. Schiffssteuervorrichtung nach Anspruch 4,
wobei die Betriebsüberwachungseinheit (24) ferner konfiguriert ist, um den stationären Betriebszustand zu erfassen, falls die Betriebsposition des Joysticks neutral bleibt, nach einem Start der Schiffshaltesteuerung zum Halten der anfänglichen Antriebskraft, und
die Schiffshalteeinheit (25) ferner konfiguriert ist, um die Bewegungsrichtung zu dem Zeitpunkt zu halten, zu dem die Erfassung stattfindet.

7. Schiffssteuervorrichtung (10) nach einem der Ansprüche 4 bis 6,
wobei die Schiffshalteeinheit (25) ferner konfiguriert ist, um die Antriebskraft zu dem Zeitpunkt der Schiffshaltesteuerung basierend auf einer Betätigung des Joysticks in der Bug-Heck-Richtung während der Schiffshaltesteuerung einzustellen.

8. Schiffssteuervorrichtung (10) nach einem der Ansprüche 1 bis 7,
wobei die intermittierende Steuereinheit (27) ferner konfiguriert ist, um ein Steuermuster der intermittierenden Steuerung basierend auf einem Betrieb eines dritten Schalters zu schalten, der einen Betrieb des Schaltens des Steuermusters der intermittierenden Steuerung in der Betriebsvorrichtung akzeptiert.

9. Schiffssteuervorrichtung (10) nach Anspruch 8,
wobei der zweite Schalter auch als der dritte Schalter dient.

10. Schiffssteuervorrichtung (10) nach einem der Ansprüche 4 bis 7,
wobei die Schiffshalteeinheit (25) ferner konfiguriert ist, um die Schiffshaltesteuerung abzubrechen, falls ein Betrieb des ersten Schalters während der Schiffshaltesteuerung erfasst wird.

11. Schiffssteuervorrichtung (10) nach einem der Ansprüche 2 bis 10,
wobei die Schiffshalteeinheit (25) ferner konfiguriert ist, um die Schiffshaltesteuerung abzubrechen, falls eine Betätigung des Joysticks auf einen vordefinierten Schiffshaltesteuerungsabbrechungszustand erfasst wird.

12. Schiffssteuervorrichtung (10) nach einem der Ansprüche 1 bis 11,
wobei das Verhalten des Schiffs (90) die Bewegungsrichtung, die einen Ruderwinkel oder einen Kurs des Schiffs aufweist, oder den Antrieb, der eine Drosselöffnung, eine Motordrehzahl und eine Geschwindigkeit des Schiffs aufweist, aufweist.

13. Schiffssteuerverfahren, aufweisend:
Eingeben einer Betriebsposition einer Betriebsvorrichtung zum Steuern einer Bewegungsrichtung oder Antriebskraft des Schiffs (90);
Erfassen eines stationären Betriebszustands, in dem sich die Betriebsposition für eine vorbestimmte Zeit nicht ändert, basierend auf einer Zeitvariation in der Betriebsposition; und
Durchführen einer Schiffshaltesteuerung zum Halten eines Verhaltens des Schiffs, falls eine Schiffshaltebedingung, die eine Erfassung des stationären Betriebszustands aufweist, erfüllt ist,
**gekennzeichnet durch** Starten einer intermittierenden Steuerung der Antriebskraft basierend auf einem Betrieb eines zweiten Schalters während der Schiffshaltesteuerung.

14. Schiffssteuerprogramm, aufweisend Anweisungen, die, wenn das Programm durch einen Computer ausgeführt wird, den Computer veranlassen, die folgenden Schritte auszuführen:
Eingeben einer Betriebsposition einer Betriebsvorrichtung zum Steuern einer Bewegungsrichtung oder Antriebskraft des Schiffs;
Erfassen eines stationären Betriebszustands, in dem sich die Betriebsposition für eine vorbestimmte Zeit nicht ändert, basierend auf einer Zeitvariation in der Betriebsposition; und
Durchführen einer Schiffshaltesteuerung zum Halten eines Verhaltens des Schiffs, falls eine Schiffshaltebedingung, die eine Erfassung des stationären Betriebszustands aufweist, erfüllt ist,
**gekennzeichnet durch** Starten einer intermittierenden Steuerung der Antriebskraft basierend auf einem Betrieb eines zweiten Schalters während der Schiffshaltesteuerung.

## Revendications

1. Dispositif de commande de navire (10), comprenant :
une unité d'entrée (IF) configurée pour entrer une position d'actionnement d'un dispositif d'actionnement pour commander une direction de déplacement ou force de propulsion du navire (90) ;
une unité de surveillance d'actionnement (24) configurée pour détecter un état stationnaire d'actionnement dans lequel la position d'actionnement ne change pas pendant une durée prédéterminée ; et
une unité de maintien de navire (25) configurée pour réaliser une commande de maintien de navire pour maintenir un comportement du navire (90) au cas où une condition de maintien de navire comprenant une détection de l'état stationnaire d'actionnement est satisfaite, **caractérisé en ce que**
le dispositif d'actionnement comprend un deuxième commutateur pour recevoir un actionnement de commande intermittente de la force de propulsion,
le dispositif de commande de navire comprend en outre :
une unité de commande intermittente (27) configurée pour démarrer la commande intermittente sur la base de l'actionnement du deuxième commutateur pendant la commande de maintien de navire.

2. Dispositif de commande de navire (10) selon la revendication 1,
dans lequel le dispositif d'actionnement comprend :
une manette configurée pour pouvoir réaliser un actionnement en marche avant, au point mort et un actionnement en marche arrière en fonction de la position d'actionnement,
dans lequel l'unité de surveillance d'actionnement (24) est en outre configurée pour détecter l'état stationnaire d'actionnement dans lequel la position d'actionnement correspondant à l'actionnement en marche avant ou à l'actionnement en marche arrière par la manette ne change pas pendant la durée prédéterminée, et
l'unité de maintien de navire (25) est en outre configurée pour maintenir la force de propulsion au moment où la détection se produit.

3. Dispositif de commande de navire (10) selon la revendication 1,
dans lequel le dispositif d'actionnement comprend une manette,
l'unité de surveillance d'actionnement (24) est en outre configurée pour détecter l'état stationnaire d'actionnement au cas où la position d'actionnement de la manette reste au point mort, et
l'unité de maintien de navire (25) est en outre configurée pour maintenir la direction de déplacement au moment où la détection se produit.

4. Dispositif de commande de navire (10) selon la revendication 1,
dans lequel le dispositif d'actionnement comprend un premier commutateur pour recevoir la commutation d'une navigation manuelle à une navigation automatique, et
le dispositif de commande de navire (10) comprend en outre une unité de navigation automatique, comprenant :
une unité de réglage préliminaire (26) configurée pour régler une valeur cible de la force de propulsion sur une force de propulsion initiale pour maintenir le navire, lors de la détection d'une action de commutation en navigation automatique par le premier commutateur,
dans lequel l'unité de maintien de navire (25) est en outre configurée pour réaliser la commande de maintien de navire pour maintenir la force de propulsion initiale après que la force de propulsion du navire devient la force de propulsion initiale.

5. Dispositif de commande de navire (10) selon la revendication 4,
dans lequel l'unité de réglage préliminaire (26) est en outre configurée pour approcher la force de propulsion initiale pour maintenir le navire (90) tout en réglant une accélération à partir de la force de propulsion à ce moment-là, lors de la détection de la commutation à la navigation automatique par le premier commutateur.

6. Dispositif de commande de navire selon la revendication 4,
dans lequel l'unité de surveillance d'actionnement (24) est en outre configurée pour détecter l'état stationnaire d'actionnement au cas où la position d'actionnement de la manette reste au point mort, après un démarrage de la commande de maintien de navire pour maintenir la force de propulsion initiale, et
l'unité de maintien de navire (25) est en outre configurée pour maintenir la direction de déplacement au moment où la détection se produit.

7. Dispositif de commande de navire (10) selon l'une des revendication 4 à 6,
dans lequel l'unité de maintien de navire (25) est en outre configurée pour régler la force de propulsion au moment de la commande de maintien de navire sur la base d'un actionnement de la manette dans la direction proue-poupe pendant la commande de maintien de navire.

8. Dispositif de commande de navire (10) selon l'une des revendications 1 à 7,
dans lequel l'unité de commande intermittente (27) est en outre configurée pour commuter un schéma de commande de la commande intermittente sur la base d'un actionnement d'un troisième commutateur qui accepte un actionnement de commutation du schéma de commande de la commande intermittente dans le dispositif d'actionnement.

9. Dispositif de commande de navire (10) selon la revendication 8,
dans lequel le deuxième commutateur sert également de troisième commutateur.

10. Dispositif de commande de navire (10) selon l'une des revendications 4 à 7,
dans lequel l'unité de maintien de navire (25) est en outre configurée pour annuler la commande de maintien de navire dans le cas où un actionnement du premier commutateur est détecté pendant la commande de maintien de navire.

11. Dispositif de commande de navire (10) selon l'une des revendications 2 à 10,
dans lequel l'unité de maintien de navire (25) est en outre configurée pour annuler la commande de maintien de navire dans le cas où un actionnement de la manette vers un état d'annulation de commande de maintien de navire prédéfini est détecté.

12. Dispositif de commande de navire (10) selon l'une des revendications 1 à 11,
dans lequel le comportement du navire (90) comprend la direction de déplacement comprenant un angle de gouvernail ou une trajectoire du navire, ou la propulsion comprenant une ouverture d'accélérateur, un régime moteur et une vitesse du navire.

13. Procédé de commande de navire, comprenant :
entrer une position d'actionnement d'un dispositif d'actionnement pour commander une direction de déplacement ou une force de propulsion du navire (90) ;
détecter un état stationnaire d'actionnement dans lequel la position d'actionnement ne change pas pendant une durée prédéterminée sur la base d'une variation de temps dans la position d'actionnement ; et
réaliser une commande de maintien de navire pour maintenir un comportement du navire dans le cas où une condition de maintien de navire comprenant une détection de l'état stationnaire d'actionnement est satisfaite,
**caractérisé par** le fait de démarrer une commande intermittente de la force de propulsion sur la base d'un actionnement d'un deuxième commutateur pendant la commande de maintien de navire.

14. Programme de commande de navire, comprenant des instructions qui, lorsque le programme est exécuté par un ordinateur, font mettre en œuvre à l'ordinateur les étapes suivantes :
entrer une position d'actionnement d'un dispositif d'actionnement pour commander une direction de déplacement ou une force de propulsion du navire ;
détecter un état stationnaire d'actionnement dans lequel la position d'actionnement ne change pas pendant une durée prédéterminée sur la base d'une variation de temps dans la position d'actionnement ; et
réaliser une commande de maintien de navire pour maintenir un comportement du navire dans le cas où une condition de maintien de navire comprenant une détection de l'état stationnaire d'actionnement est satisfaite,
**caractérisé par** le fait de démarrer une commande intermittente de la force de propulsion sur la base d'un actionnement d'un deuxième commutateur pendant la commande de maintien de navire.
